# EUROPEAN PATENT APPLICATION

(11) **EP 3 796 146 A1**
(43) Date of publication of application: **24.03.2021**
(21) Application number: 19198045.7
(22) Date of filing: 18.09.2019
(51) Int. Cl.: G06F 3/0488

(54) **INPUT METHOD FOR A VIRTUAL KEYBOARD**

(71) Applicant: Advanced Digital Broadcast S.A., 1293 Bellevue (CH)
(72) Inventor: Gaczynski, Adam, 65-119 Zielona Gora (PL)
(74) Representative: Blonski, Pawel

(57) **Abstract**

Input method for a virtual keyboard, the method being characterized in that it comprises the steps of: assigning (901) a plurality of input characters to at least two matrices of characters; associating (902) a key input with each of said characters of said at least two matrices of characters; generating (903) a signal comprising a display screen having said at least two matrices of characters wherein one of said at least one matrices is an active matrix; allowing navigation (904) between said at least two matrices of characters wherein said navigation allows to switch the active matrix to another matrix; accepting input keys (905) from a controller (200) to select a character of the active matrix.

## Description

### TECHNICAL FIELD

The present invention relates to a system and method for a virtual keyboard. In particular, the present invention relates to a method for allowing quicker character entries using a virtual keyboard, controlled with a controller having a reduced number of keys.

### BACKGROUND OF THE INVENTION

Virtual keyboards are becoming very common in electronic devices, mainly because of the growing number of devices such as mobile phones, portable cameras, portable navigation devices. Still, virtual keyboards are one of the most primitive mechanisms for entering alphanumeric characters.

Text entry is in virtual keyboards much slower than entering information using physical keyboards. Especially, in case of game controllers or television remote controllers, which have a reduced number of keys, text input is very slow. It typically requires pressing directional keys many times in order to reach and select a desired letter and such pattern is executed for every character to be input.

Therefore, there exists a need to improve typing performance of virtual keyboards, especially those operated without a use of a cursor operated by a mouse, a trackball or a touch interface.

The aim of the development of the present invention is an improved system and method for a virtual keyboard allowing quicker text entry.

### SUMMARY AND OBJECTS OF THE PRESENT INVENTION

An object of the present invention is a method for a computer-implemented virtual keyboard, the method being characterized in that it comprises the steps of: assigning a plurality of input characters to at least two matrices of characters; associating a key input with each of said characters of said at least two matrices of characters; generating a signal comprising a display screen having said at least two matrices of characters wherein one of said at least one matrices is an active matrix; allowing navigation between said at least two matrices of characters wherein said navigation allows to switch the active matrix to another matrix; accepting input keys from a controller to successively select characters of the active matrix.

Preferably, each matrix of characters has an equal size.

Preferably, the size of said matrix of characters is 3 by 3 each field of the matrix having assigned one character.

Preferably, said matrices of characters are arranged on a plurality of axes to which a user may navigate.

Preferably, said matrices of characters are arranged on a plurality of axes, such that letters are present in matrices on a first axis, digits are present in a matrix positioned on a second axis while other characters are present on a third axis.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing a system and method for a virtual keyboard. Further details and features of the present invention, its nature and various advantages will become more apparent from the following detailed description of the preferred embodiments shown in a drawing, in which:
Fig. 1 presents a diagram of the system according to the present invention;
Fig. 2 shows an example of a remote control unit used to operate a virtual keyboard;
Fig. 3 shows a general overview of a complete system operated by a user;
Fig. 4 presents an example of a display screen arrangement showing 3x3 matrices that may be navigated to by using navigation keys of a remote controller;
Figs. 5A and Fig. 5B show use of navigational keys in order to switch form one matrix to another;
Fig. 6 presents a process of inputting a text "HELLO!' using the arrangements of Figs. 4-5;
Fig. 7 presents a diagram of the method according to the present invention;
Fig. 8 presents simple scenario related to text input; and
Fig. 9 presents a high level method according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

In order to improve text input and make it easy to implement, the present method is based on using characters matrices with assigned numbers keys (e.g. 1 - 9 keys of a controller) to each element of a given matrix. At a given instant, only one matrix is active and a character from said active matrix may be chosen.

In order to change the active matrix, navigation keys are preferably used. A proposed keypad view, groups matrices in three axes, preferably parallel (Nevertheless a single axis is sufficient). In the main/middle/horizontal axis, there are present matrices with letters. The upper/vertical axis gives access to matrix with numbers, lower axis to special characters. This virtual keypad allows to reduce number of key presses needed to select a desired character.

The system and method will be presented below with reference to an embodiment related to a television Set Top Box (STB). However, it may be implemented in an equivalent manner to other content receiving devices, such as personal computers, portable devices, smartphones, etc. that may be operated using a virtual keyboard.

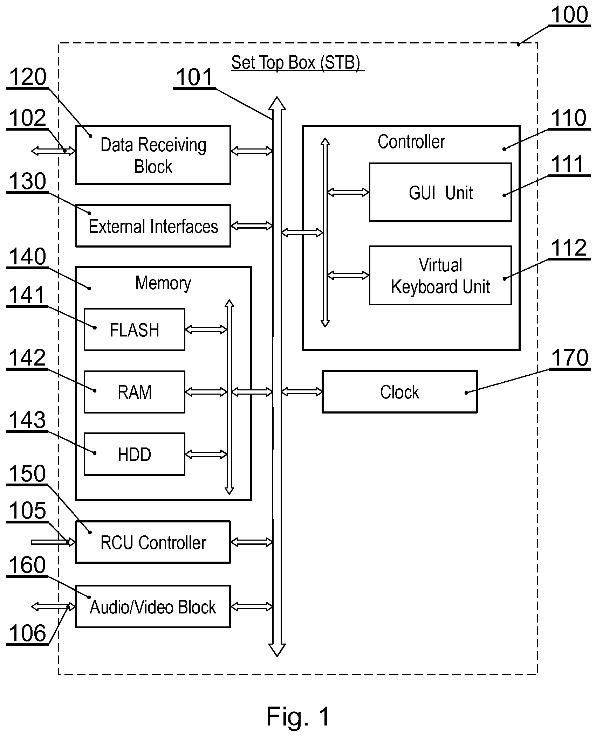

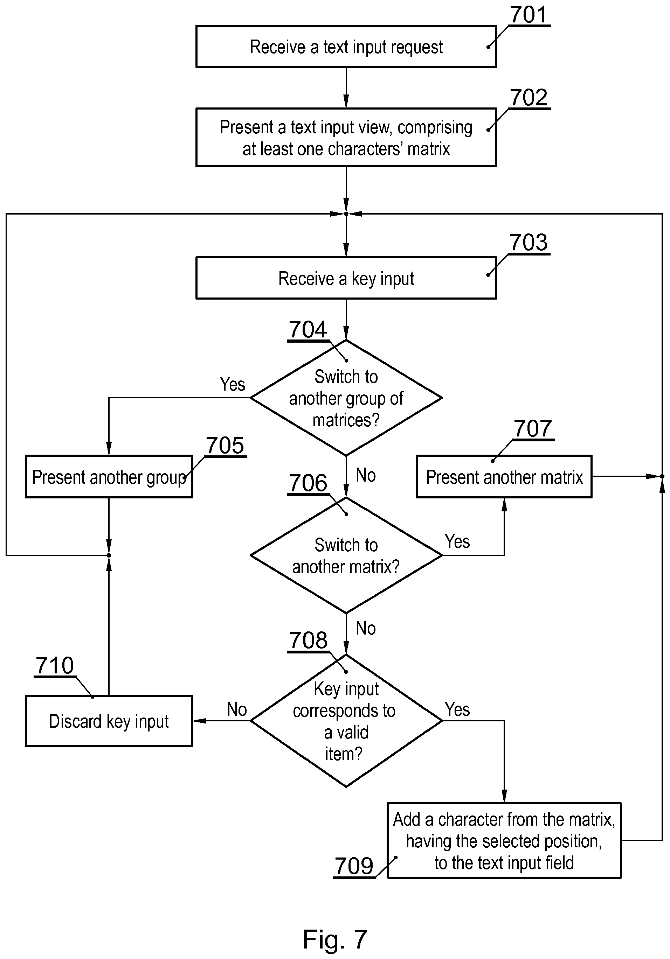

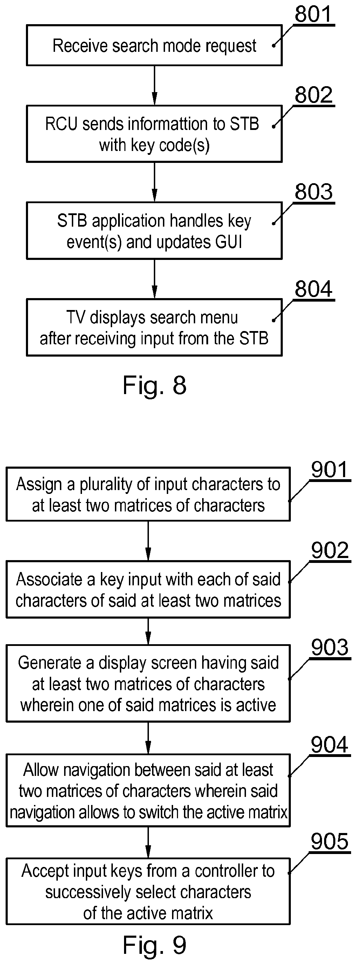

Fig. 1 presents an example of a structure of a Set Top Box (STB) being a device that may implement the present invention. A controller (110) comprises a plurality of units configured to provide the functions of the system as described herein in accordance with the method of Figs. 7 and 9.

A graphical user interface (GUI) unit (111) is responsible for a generating user interface comprising virtual keyboard according to the present invention, which is managed by a virtual keyboard unit (112) responsible for generating and operating said virtual keyboard. Thus, the GUI unit (111) is responsible for any graphical tasks such as generating or drawing objects to be present in the output video signal.

The STB (100) operates utilizing memory blocks (140), that may comprise RAM (142) and/or Flash (141) blocks and/or a hard disk drive (HDD) (143) or another type of mass storage that can be used to store video or other data locally at the STB, but is not essential for its operation. The FLASH memory (141) may store configuration of the virtual keyboard such as its size on a screen, its timing parameters, its graphical parameters as will be presented in details with reference to the following drawings.

A clock module (170) is configured to provide timing data necessary for cooperation of the device units as well as for monitoring relevant times required during virtual keyboard's operation.

A data receiving block (120) is configured to receive downstream data 102, such as video content, from the broadcasting distribution network. The content receiving block (120) (also called a front-end block) may comprise a plurality of tuners (such as satellite, cable, terrestrial or IPTV tuners), wherein one of the tuners receives content to be displayed at the television screen to which the STB is directly connected (e.g. the STB (100) connected to a TV set) and other tuner(s) receive(s) content to be recorded at the HDD (143) while the remaining tuner(s) may be used for predictive channel tuning.

External interfaces (130), such as the Ethernet interface, are configured to communicate, via at least one transmission channel, with the Ethernet (IP) network or the wireless network, in order to receive applications and/or content recommendation data, as well as to transmit user or STB statistic data.

The STB (100) is operable by the user via a remote control unit (RCU) that communicates, typically via an infrared (IR) receiver receiving an IR signal (105), with a RCU controller block (150).

An audio/video block (160) is an example of a content presentation block and configured to decode the received content, convert it to an audio/video format suitable for presentation to the user, and to transmit the converted content via a transmission channel (106) to the TV set to which the STB is directly connected.

All modules of the STB communicate with each other via one or more internal data buses (101).

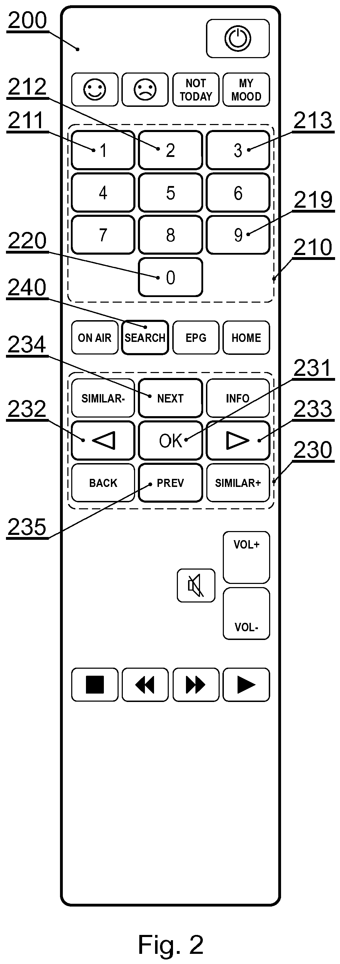

Fig. 2 presents an example of an RCU (200) that may be used to operate the virtual keyboard according to the present invention. As is evident, the RCU (200) does not comprise a full hardware keyboard (such as a QWERTY keyboard) and provides only a limited number of keys (210, 230) that will be used to operate the virtual keyboard according to the present invention.

In particular, in a preferred embodiment only four keys are needed in order to navigate to alphanumeric characters matrices. In some simpler embodiments (as will be shown in the subsequent drawings), only two keys are sufficient to operate/ navigate the virtual keyboard (e.g. only left/right navigation).

An OK button (231) may accept a complete text input, while one or more pairs of keys select alphanumeric characters of the virtual keyboard. In some embodiments a CAPS LOCK 225 key may be made available to a user.

For navigation purposes, in order to enter characters, according to the present invention, there are used navigation keys such as up/down/left/right (232 - 235).

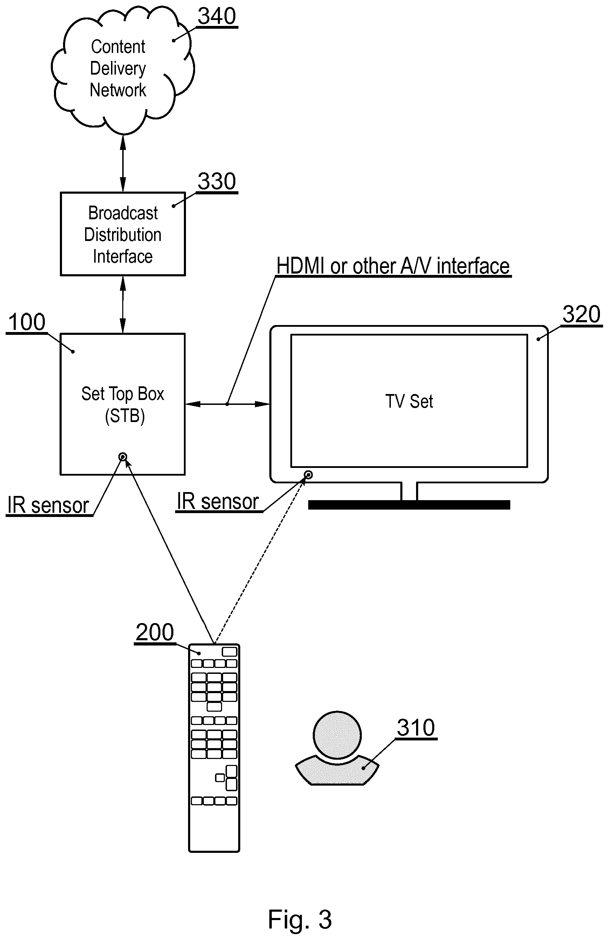

Fig. 3 shows a general overview of a complete system operated by a user (310). The present method uses a common RCUs (200) without a QWERTY keypad.

Character selection action relies on presenting a virtual keyboard on a screen (320) rendered by an application software running on a device (100) and choosing a desired character after a key press event sent by said RCU (200) to an IR sensor. The STB (100) receives content from a distribution interface (300) connected to a content delivery network (340).

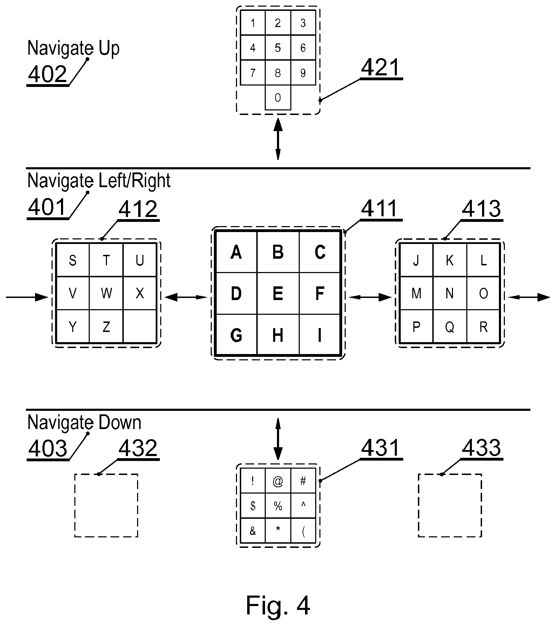

Fig. 4 presents an example of a display screen arrangement showing 3x3 matrices that may be navigated to by using navigation keys of said remote controller. A 3x3 matrix is an example and other arrangements may be applied such as 3x2, 2x2 or 4x4 depending on the controller (200) used.

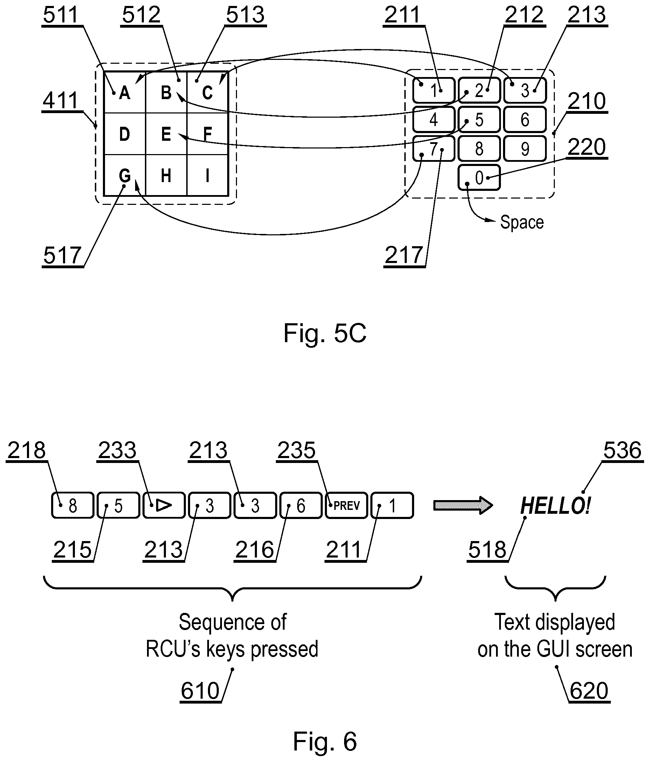

According to this example, the active matrix (411) comprises letters A - I, which may be selected directly using the RCU (200) for example with keys (210) wherein each key is assigned to a letter as per the active matrix (411). To this end depressing key '1' on the RCU selects the letter 'A' and similarly selecting '9' on the RCU inputs letter 'I' of the active matrix (411). Keys assignment has been shown in Fig. 5C. As an option a 'space' character may be assigned to the '0' key (or otherwise any other fixed key) on the RCU (200) and be always available to a user for selection.

In the event of receiving a navigational key input (e.g. up/down/left/right) from said RCU (200) the active matrix (411) will be switched correspondingly to either matrix (421) or (412) or (413) or (431).

Said matrices may be arranged on a plurality of axes, for example such that letters are present in matrices on a first axis (411 - 413), digits are present in a matrix positioned on a second axis (421) while other characters may be present on a third axis (431 - 433). In this embodiment of Fig. 4, the axes are parallel to each other.

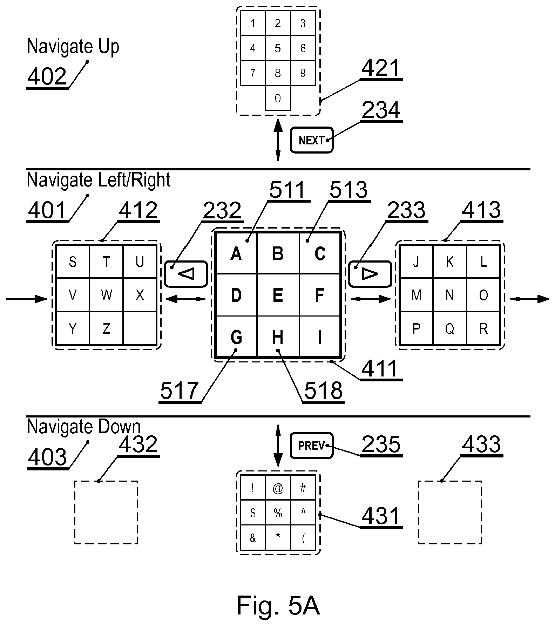

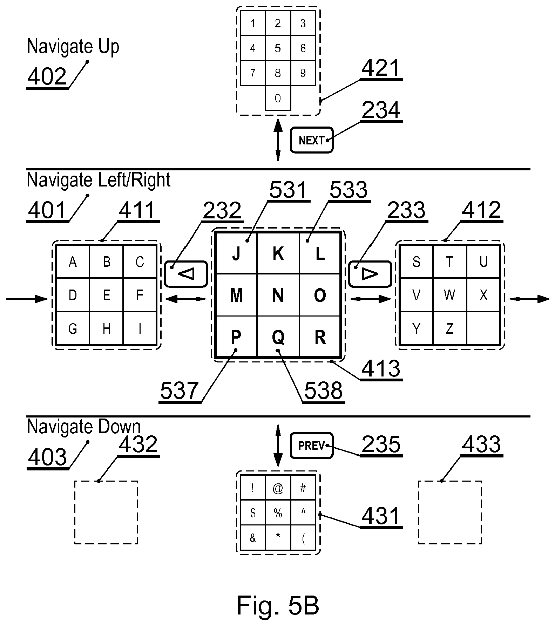

This is also shown in Fig. 5A and Fig. 5B wherein such navigational keys are presented and used in order to switch form matrix (411) to matrix (413).

Fig. 6 presents a process of inputting a text "HELLO!' using the arrangements of Figs. 4-5. Starting from matrix (411) as an active matrix, the system receives input of the following keys '8', '5', navigate right to matrix (413), '3', '3', '6', navigate to matrix (431), and '1', which results in inputting the text (518) and its presentation (620) on the display screen (320).

Fig. 7 presents a diagram of the method according to the present invention. The method starts at step (701) from receiving a text input request. Such request is for example a start of a search application and focusing on a text input window, which invokes text input interface.

Subsequently (702), the system presents a text input view, comprising at least one characters' matrix (411). In case there is displayed only one matrix it is the active matrix. The matrix arranges a subset of alphanumeric characters, for example a 3x3 set of 9 characters as shown in Figs. 4-5.

Next at step (703) the system awaits a key input from the RCU (200). The key input may typically result in scrolling the matrix to another one, exiting input, inputting a character or configuring text input options.

Therefore, at step (704) it is checked whether the input key matches a condition for switching the active matrix to another group. If it does (705), for example 'up'/'next' key (234) has been pressed, the user interface is instructed to present another matrices group, of which one typically becomes active and the process returns to step (703).

If at step (705), the input key does not correspond to an action of switching the active matrix to another matrices group, it is checked at step (706) whether the input key corresponds to an action of switching to another matrix within the current group. If it does, another matrix becomes active and is presented (707). Otherwise, at step (708) the method verifies whether the input key is valid (708) i.e. it corresponds to a character present in the active matrix. If it does, the selected character is input to the system and subsequently to the corresponding GUI component such as a text input field. In case the input key is not valid, at step (710) it is discarded and the system returns to awaiting input of another key at step (703).

Fig. 8 presents simple scenario related to text input. At step (801) the system receives a request to enter a search mode (for example search by title widget).

Next the RCU (200) sends (802) keys input by a user to a receiver (in this case STB). At step (803) the STB successively handles key event(s) and updates GUI of the search screen. Lastly, a display screen, such as a TV, displays said search menu after receiving input from the STB.

Fig. 9 presents a high level method according to the present invention. The method starts from assigning (901) a plurality of input characters to at least two matrices of characters. Subsequently there is executed associating (902) a key input with each of said characters of said at least two matrices of characters. Subsequently, there's generating (903) a signal comprising a display screen having said at least two matrices of characters wherein one of said at least one matrices is an active matrix. Further, the process comprises allowing navigation (904) between said at least two matrices of characters wherein said navigation allows to switch the active matrix to another matrix. Lastly, there is executed accepting input keys (905) from a controller (200) to successively select characters of the active matrix.

The present invention improves speed of text input using virtual keyboards wherein a user is able to select a character from a designated subset of characters and wherein said selection of characters subset is successively changed. Therefore, the invention provides a useful, concrete and tangible result.

The solution presented herein is applicable in user interfaces, especially of mobile devices and relates to processing alphanumeric characters input. Thus, the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for a virtual keyboard may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for a computer-implemented virtual keyboard, the method being **characterized in that** it comprises the steps of:
• assigning (901) a plurality of input characters to at least two matrices of characters;
• associating (902) a key input with each of said characters of said at least two matrices of characters;
• generating (903) a signal comprising a display screen having said at least two matrices of characters wherein one of said at least one matrices is an active matrix;
• allowing navigation (904) between said at least two matrices of characters wherein said navigation allows to switch the active matrix to another matrix;
• accepting input keys (905) from a controller (200) to successively select characters of the active matrix.

2. The method according to claim 1 wherein each matrix of characters has an equal size.

3. The method according to claim 2 wherein the size of said matrix of characters is 3 by 3 each field of the matrix having assigned one character.

4. The method according to claim 1 wherein said matrices of characters are arranged on a plurality of axes to which a user may navigate (904).

5. The method according to claim 4 wherein said matrices of characters are arranged on a plurality of axes, such that letters are present in matrices on a first axis (411 - 413), digits are present in a matrix positioned on a second axis (421) while other characters are present on a third axis (431 - 433).

6. A computer program comprising program code means for performing all the steps of the computer-implemented method according to claim 1 when said program is run on a computer.

7. A computer readable medium having stored thereon computer-executable instructions performing all the steps of the computer-implemented method according to claim 1 when executed on a computer.
